# EUROPÄISCHE PATENTSCHRIFT

(11) **EP 1 581 395 B1**
(45) Veröffentlichungstag und Bekanntmachung des Hinweises auf die Patenterteilung: **07.05.2008**
(21) Anmeldenummer: 03771067.0
(22) Anmeldetag: 22.07.2003
(51) Int. Cl.: B42D 1/00

(54) **INDIVIDUALISIERTES SICHERHEITSDOKUMENT**
INDIVIDUALISED SECURITY DOCUMENT
DOCUMENT DE SECURITE INDIVIDUALIS

(30) Priorität: 24.07.2002 DE 10233452
(43) Veröffentlichungstag der Anmeldung: 05.10.2005
(73) Patentinhaber: OVD Kinegram AG, 6301 Zug (CH)
(72) Erfinder: STAUB, René, CH-6332 Hagendorn (CH); GRIEBEL, Thomas, Herbert, CH-6331 Hünenberg (CH); KROLZIG, Olaf, CH-5712 Beinwill am See (CH); BUCHER, Josef, CH-6340 Baar (CH)
(74) Vertreter: Zinsinger, Norbert
(86) Internationale Anmeldenummer: PCT/EP2003/007984
(87) Internationale Veröffentlichungsnummer: WO 2004/011272

(56) Entgegenhaltungen:
- DE-A- 19 940 790
- US-A- 3 664 910
- US-A- 5 037 139

## Beschreibung

Die Erfindung betrifft ein individualisiertes Sicherheitsdokument wie einen Reisepaß, einen Führerschein, ein Notariatszertifikat, ein Echtheits-, Lizenz-Garantiezertifikat, ein Sparbuch o. dgl., das eine Anzahl Blätter aufweist, die miteinander mittels einer Heftung, Faltung oder Klebung verbunden sind.

Bei solchen Sicherheitsdokumenten kommen Übertragungsfolien zur Anwendung, wie sie in der DE 199 40 790 A1 beschrieben sind. Diese bekannte Übertragungsfolie benötigt zu ihrer Verarbeitung keinen größeren maschinellen Aufwand sondern kann mit relativ einfachen Apparaturen sicher und zuverlässig verarbeitet werden, weil die Übertragungsfolie durch ihre formstabile Grundfolie die für eine einfache Verarbeitung erforderliche Stabilität aufweist. Bei dieser bekannten Übertragungsfolie kann die Grundfolie mit einem Trägerfilm und mit einer Dekorschichtanordnung in eine Mehrzahl von etikettenartigen Einzelelementen unterteilt sein, wobei die Einzelelemente auf einer Trägerfolienbahn, von dieser abziehbar, angeordnet sein können.

Die Verwaltung und das Handling derartiger mit Sicherheitselementen versehener Übertragungsfolien bzw. Einzelelemente und der zugehörigen individualisierten Sicherheitsdokumente wie Reisepässe, Sparbücher o.dgl. ist mit einem nicht zu vernachlässigenden Aufwand verbunden. Das besagte Handling und die genannte Verwaltung bergen außerdem Fehlermöglichkeiten.

Deshalb liegt der Erfindung die Aufgabe zugrunde, ein individualisiertes Sicherheitsdokument der eingangs genannten Art zu schaffen, wobei Handling und Verwaltung der Sicherheitsdokumente und der mit Sicherheitselementen versehenen Übertragungsfolie wesentlich vereinfacht ist.

Diese Aufgabe wird erfindungsgemäß durch die Merkmale des Anspruches 1 gelöst. Bevorzugte Aus- bzw. Weiterbildungen des erfindungsgemäßen Sicherheitsdokumentes sind in den Unteransprüchen gekennzeichnet.

Erfindungsgemäß ist in das individualisierte Sicherheitsdokument eine mit mindestens einem Sicherheitselement versehene Übertragungsfolie eingebunden, die eine Grundfolie und eine die Sicherheitselemente aufweisende Dekorschichtanordnung aufweist. Die mit Sicherheitselementen versehene Übertragungsfolie wird durch die Heftung oder Klebung des Sicherheitsdokumentes in dieses eingebunden. Hierdurch ergibt sich in vorteilhafter Weise eine genaue Positionierung der Übertragungsfolie bzw. der Sicherheitselemente der Übertragungsfolie in Bezug auf das jeweilige Sicherheitsdokument. Möglich wäre auch, daß das Sicherheitselement mittels eines Klebers bzw. Kleberstreifens in das Sicherheitsdokument eingeklebt ist. Dabei kann es sich um einen Temporär- oder Permanentkleber handeln. Von besonderem Vorteil ist, daß das Handling der Sicherheitsdokumente und der mit den Sicherheitselementen versehenen Übertragungsfolien wesentlich vereinfacht und eine besondere Verwaltung derselben quasi entfällt. Daraus resultiert in weitere vorteilhafter Weise, daß Fehlermöglichkeiten bei der Zuordnung von Sicherheitsdokumenten und zugehörigen, mit Sicherheitselementen versehener Übertragungsfolien wesentlich reduziert sind.

Erfindungsgemäß kann die Grundfolie der mit Sicherheitselementen versehenen Übertragungsfolie aus einem Kunststoff bestehen. Bei dem Kunststoff kann es sich um einen nicht transparenten oder einen transparenten Kunststoff handeln. Eine derartige Ausbildung der zuletzt genannten Art mit einer Grundfolie aus einem transparenten Kunststoff weist den Vorteil auf, daß die Positionierung der Übertragungsfolie einfach möglich ist und daß die Überprüfung und der Vergleich beispielsweise von Daten und Paßnummern usw. einfach möglich ist.

Erfindungsgemäß ist es auch möglich, daß die Grundfolie der mit Sicherheitselementen versehenen Übertragungsfolie aus Papier oder einem papierähnlichen Substrat besteht. Bei einer solchen Ausführungsform kann die Grundfolie mindestens eine Fensteröffnung aufweisen. Durch die Fensteröffnung hindurch ist es beispielsweise möglich, während der Personalisierung beispielsweise die Paßnummer des Sicherheitsdokumentes sichtbar zu machen.

Unabhängig davon, ob die Grundfolie aus Papier oder aus transparentem Kunststoff besteht, kann die Sicherheitselemente aufweisende Dekorschichtanordnung mittels einer Ablöseschicht mit einem Trägerfilm temporär verbunden sein, der mittels eines Permanentklebers mit der Grundfolie dauerhaft verbunden ist. Besteht die Grundfolie aus einem transparenten Kunststoff, dann kann auf den Trägerfilm gegebenenfalls auch verzichtet werden.

Erfindungsgemäß kann die Sicherheitselemente aufweisende Dekorschichtanordnung auf die Grundfolie oder auf den mit der Grundfolie dauerhaft verbundenen Trägerfilm als Etikett aufgespendet sein. Eine andere Möglichkeit besteht darin, daß die Dekorschichtanordnung auf die Grundfolie oder auf den mit der Grundfolie dauerhaft verbundenen Trägerfilm aufkaschiert ist.

Das Sicherheitselement kann eine Seite des Sicherheitsdokumentes vollständig oder nur teilweise bedecken. Es können Löcher bzw. Aussparungen vorhanden sein, um beispielsweise ein Unterschriftenfeld oder Platz für einen integrierten Chip frei zu lassen.

Bei den Sicherheitselementen der Dekorschichtanordnung kann es sich um holografisch oder beugungsoptisch wirksame Strukturen handeln.

Bei dem erfindungsgemäßen individualisierten Sicherheitsdokument kann die Grundfolie und/oder der Trägerfilm zur genauen Positionierung der Dekorschichtanordnung mit Positionsmarkierungen versehen sein. Desgleichen ist es möglich, daß die Grundfolie und/oder der Trägerfilm mit Nummerierungen, Strich- bzw. Barcodes o. dgl. versehen ist.

Zum einfachen kraft- und zeitsparenden Austrennen der Grundfolie oder der Grundfolie mit dem mit ihr dauerhaft verbundenen Trägerfilm nach dem Transfer der Dekorschichtanordnung auf die zugehörige Seite des Sicherheitsdokumentes hat es sich als vorteilhaft erwiesen, wenn die Grundfolie mit einer Perforation ausgebildet ist. Hierfür wird ein selbständiger Patentschutz beantragt. Dabei ist es möglich, daß die Perforation nur in der Grundfolie ausgebildet und die Dekorschichtanordnung von der Perforation seitlich beabstandet ist, oder daß die Perforation sich durch die Grundfolie und durch die Dekorschichtanordnung hindurcherstreckt.

Durch Faltungen, Stanzungen, überstehende "Ecken" und dergleichen kann der Verbund aus Dekorschicht und Übertragungsfolie so modifiziert werden, daß ein leichteres Austrennen nach dem Laminierschritt erfolgen kann.

Erfindungsgemäß kann die Perforation der Sicherheitselemente aufweisenden Übertragungsfolie mit der Heftung oder Klebung des Sicherheitsdokumentes deckungsgleich vorgesehen und die mit den Sicherheitselementen versehene Übertragungsfolie mittels der Heftung oder Klebung in dem Sicherheitsdokument fixiert sein. Eine andere Möglichkeit besteht darin, daß die Perforation der Sicherheitselemente aufweisenden Übertragungsfolie gegen die Heftung oder Klebung des Sicherheitsdokumentes seitlich versetzt vorgesehen und der durch die Perforation bestimmte Randbereich der Übertragungsfolie mittels der Heftung oder Klebung im Sicherheitsdokument derartig fixiert ist, daß auf beiden Seiten der Heftung oder Kleber ein Grundfolienstreifen verbleibt, wenn die Grundfolie nach dem Transfer der Übertragungsfolie auf die entsprechende Seite des Sicherheitsdokumentes aus dem Sicherheitsdokument entlang der Perforation herausgetrennt wird.

Bei einer solchen Ausbildung der zuletzt genannten Art kann die Grundfolie aus einem Sicherheitsmerkmale aufweisenden Sicherheitspapier, ggf. mit einem Druck, bestehen, so daß sich ein im Sicherheitsdokument verbleibender Grundfolienstreifen mit entsprechenden Sicherheitsmerkmalen ergibt.

Wahlweise ist es auch möglich, die Übertragungsfolie bei der Individualisierung bzw. Personalisierung zu bedrucken.

Erfindungsgemäß kann die mit Sicherheitselementen versehene Übertragungsfolie an eine Seite des Sicherheitsdokumentes angepaßt Flächenabmessungen aufweisen. Es ist jedoch auch möglich, daß die mit Sicherheitselementen versehene Übertragungsfolie an eine Doppelseite des Sicherheitsdokumentes angepaßte Flächenabmessungen aufweist.

Weitere Einzelheiten, Merkmale und Vorteile ergeben sich aus der nachfolgenden Beschreibung von in der Zeichnung schematisch dargestellten Ausführungsformen des erfindungsgemäßen individualisierten Sicherheitsdokumentes wie eines Reisepasses, eines Sparbuches o.dgl.

Es zeigen:
- Figur 1: schematisch eine Frontansicht einer ersten Ausbildung des Sicherheitsdokumentes,
- Figur 2: eine der Figur 1 ähnliche Frontansicht einer zweiten Ausführungsform des Sicherheitsdokumentes,
- Figur 3: eine den Figuren 1 und 2 ähnliche Frontansicht einer dritten Ausbildung des Sicherheitsdokumentes,
- Figur 4: eine den Figuren 1 bis 3 ähnliche Frontansicht einer vierten Ausführungsform des Sicherheitsdokumentes,
- Figur 5: schematisch und nicht maßstabgetreu eine Ausbildung der Übertragungsfolie des Sicherheitsdokumentes gemäß Figur 2,
- Figur 6: eine der Figur 5 ähnliche schematische Ansicht einer anderen Ausführungsform der Übertragungsfolie für ein Sicherheitsdokument gemäß den Figuren 1, 2 oder 3, und
- Figur 7: stark vergrößert und nicht maßstabgetreu eine Schnittansicht der Übertragungsfolie gemäß Detail VII in Figur 5.

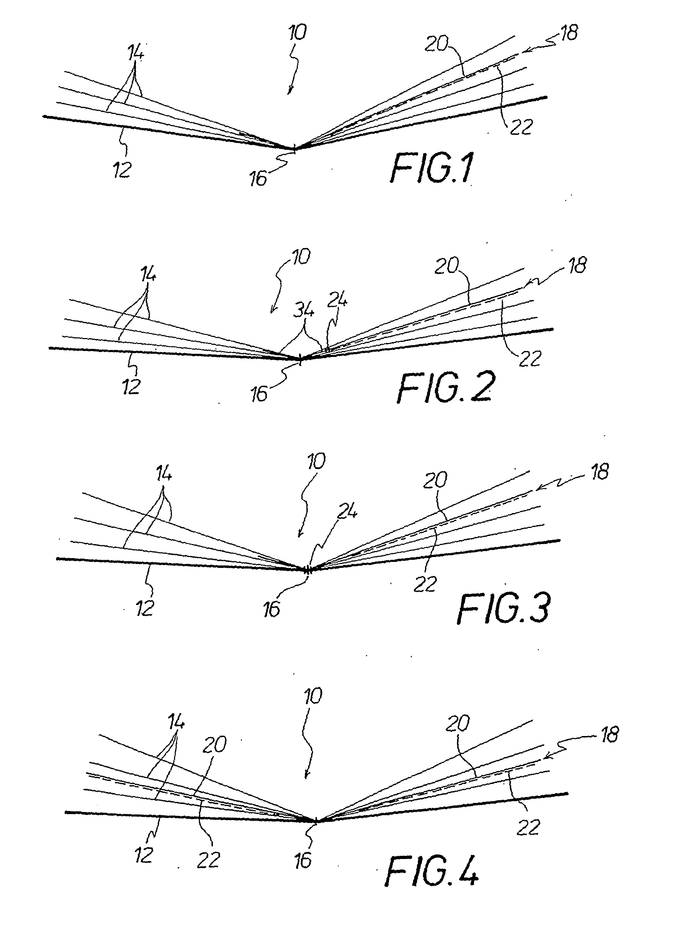

Figur 1 zeigt schematisch ein aufgeschlagenes individualisiertes Sicherheitsdokument 10, bei dem es sich beispielweise um einen Reisepaß handelt. Das Sicherheitsdokument 10 weist einen Umschlag 12 und eine Anzahl Blätter 14 auf, die miteinander und mit dem Umschlag 12 mittels einer Heftung 16 verbunden sind. Bei der Heftung 16 kann es sich um eine Heftnaht oder um eine Klammerung handeln. Die Blätter 14 und der Umschlag 12 können auch mittels einer Klebung miteinander in an sich bekannter Weise verbunden sein.

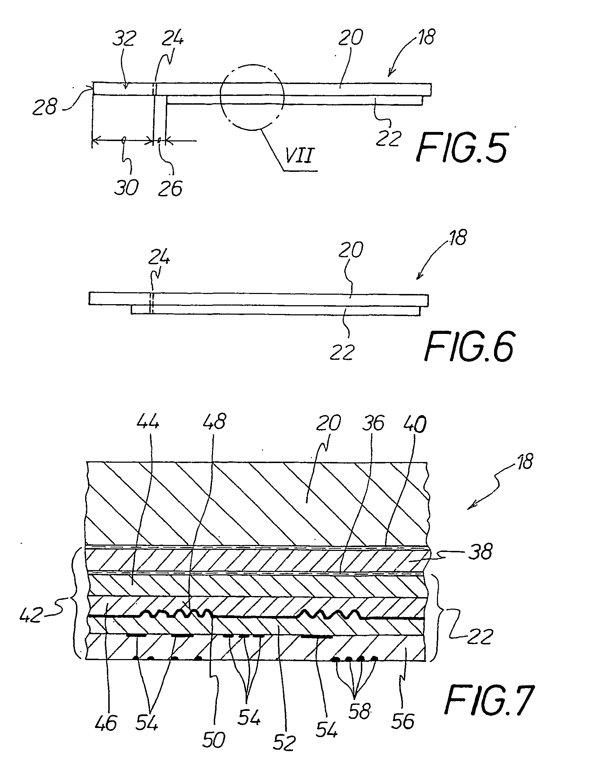

In das Sicherheitsdokument 10 ist eine mit Sicherheitselementen versehene Übertragungsfolie 18 mittels der Heftung 16 eingebunden. Die Übertragungsfolie 18 weist eine Grundfolie 20 und eine die Sicherheitselemente aufweisende Dekorschichtanordnung 22 auf, wie sie weiter unten in Verbindung mit Figur 7 detailliert beschrieben wird. Eine solche Übertragungsfolie ist auch in der eingangs erwähnten DE 199 40 790 A1 offenbart.

Nach dem Transfer der in Figur 1 durch eine strichlierte Linie angedeuteten Dekorschichtanordnung 22, der durch geeignete Wärmeeinwirkung erfolgt, wobei die Grundfolie 20 von der Dekorschichtanordnung 22 abgelöst wird, wird die Grundfolie 20 aus dem Sicherheitsdokument 10 herausgetrennt. Die Dekorschichtanordnung 22 verbleibt großflächig festhaftend am entsprechenden Blatt 14 des Sicherheitsdokumentes 10. Die Dekorschichtanordnung 22 kann auch am Umschlag 12 vorgesehen werden und diesen flächig oder partiell bedecken.

Figur 2 verdeutlicht in einer der Figur 1 ähnlichen schematischen Darstellung ein Sicherheitsdokument 10 mit einem Umschlag 12 und mit Blättern 14, die mittels einer Heftung 16 miteinander und mit dem Umschlag 12 zum Sicherheitsdokument 10 verbunden sind. In das Sicherheitsdokument 10 ist eine Übertragungsfolie 18 mit eingebunden, die eine Grundfolie 20 und eine Dekorschichtanordnung 22 aufweist.

Die Übertragungsfolie 18 ist mit einer Perforation 24 ausgebildet. Die Perforation 24 ist - wie auch die Figur 5 verdeutlicht - in der Grundfolie 20 ausgebildet und von der Dekorschichtanordnung 22 seitlich beabstandet. Dieser Seitenabstand ist in Figur 5 mit der Bezugsziffer 26 bezeichnet. Die Perforation 24 ist von dem einen Rand 28 der Grundfolie 20 definiert beabstandet und verläuft zum Rand 28 parallel. Dieser Abstand ist in Figur 5 mit der Bezugsziffer 30 bezeichnet. Die Übertragungsfolie 18 ist in das Sicherheitsdokument 10 derartig eingebunden, daß die Heftung 16 in einem mittleren Bereich des Randabschnittes 32 der Grundfolie 20 verläuft, der durch den Seitenrand 28 der Grundfolie 20 und die in der Grundfolie 20 ausgebildete Perforation 24 begrenzt ist (sh. Figur 5).

Nach dem Transfer der Dekorschichtanordnung 22 auf das zugehörige Blatt 14 des Sicherheitsdokumentes 10 wird die während des Transfers von der Dekorschichtanordnung 22 gelöste Grundfolie 20 entlang der Perforation 24 aus dem Sicherheitsdokument 10 herausgetrennt, so daß zu beiden Seiten der Heftung 16 jeweils ein Grundfolienstreifen 34 verbleibt (sh. Figur 2). Dieser Grundfolienstreifen 34 kann Sicherheitsmerkmale aufweisen. Bei einer solchen Ausbildung besteht die Grundfolie 20 der in das Sicherheitsdokument 10 eingebundenen Übertragungsfolie 18 zweckmäßigerweise aus einem Sicherheitspapier.

Die Figur 2 verdeutlicht schematisch eine Ausbildung, bei der die Perforation 24 der Übertragungsfolie 18 und die Heftung 16 des Sicherheitsdokumentes 10 voneinander seitlich beabstandet sind. Demgegenüber verdeutlicht die Figur 3 schematisch eine Ausführungsform, bei der die Heftung 16 des Sicherheitsdokumentes 10 und die Perforation 24 der in das Sicherheitsdokument 10 eingehefteten Übertragungsfolie 18 deckungsgleich vorgesehen sind. Nach dem Transfer der Dekorschichtanordnung 22 auf das zugehörige Blatt 14 des Sicherheitsdokumentes 10 wird die Grundfolie 20 beidseitig der Heftung 16 aus dem Sicherheitsdokument 10 entlang der Perforation 24 vollständig, d.h. restlos herausgetrennt.

Die Figuren 1 bis 3 verdeutlichen Ausführungsformen des individualisierten Sicherheitsdokumentes 10, bei welchem die mit Sicherheitselementen versehene Übertragungsfolie 18 an eine Seite des Sicherheitsdokumentes 10 angepaßte Flächenabmessungen aufweisen. Demgegenüber verdeutlicht die Figur 4 schematisch eine Ausführungsform, bei der die mit Sicherheitselementen versehene Übertragungsfolie 18 Flächenabmessungen aufweist, die an eine Doppelseite des individualisierten Sicherheitsdokumentes 10 angepaßt sind.

Gleiche Einzelheiten sind in den Figuren 1 bis 4 jeweils mit denselben Bezugsziffern bezeichnet, so daß es sich erübrigt, in Verbindung mit allen diesen Figuren alle Einzelheiten jeweils detailliert zu beschreiben.

Figur 6 verdeutlicht schematisch in einer der Figur 5 ähnlichen Stirnansicht eine Ausbildung der Übertragungsfolie 18 mit einer Perforation 24, die sich durch die Grundfolie 20 und durch die Dekorschichtanordnung 22 der Übertragungsfolie 18 hindurcherstreckt.

Figur 7 verdeutlicht in einer Schnittdarstellung stark vergrößert und nicht maßstabgetreu eine Ausbildung der Übertragungsfolie 18 mit der Grundfolie 20 aus Papier oder transparentem Kunststoffmaterial, und mit der Dekorschichtanordnung 22, die mittels einer Ablöseschicht 36 mit einem Trägerfilm 38 ablösbar verbunden ist. Der Trägerfilm 38 ist mit der Grundfolie 20 mittels eines Permanentklebers 40 dauerhaft verbunden. Der Trägerfilm 38 und die Dekorschichtanordnung 22 bilden mit der zwischen diesen vorgesehenen Ablöseschicht 36 eine an sich bekannte Heißprägefolie 42.

Besteht die Grundfolie 20 aus einem transparenten Kunststoffmaterial, so kann auf den Trägerfilm 38 gegebenenfalls auch verzichtet werden.

Die Dekorschichtanordnung 22 weist eine Schutzlackschicht 44 und eine Replizierlackschicht 46 auf. Die Replizierlackschicht 46 ist mit einer holografisch oder beugungsoptisch wirksamen Struktur 48 ausgebildet. Die Struktur 48 ist mit einer hochreflektierenden Schicht 50 versehen, wodurch ein Sicherheitselement realisiert ist. Die Dekorschichtanordnung 22 weist außerdem eine Haftvermittler- oder erste Kleberschicht 52 auf. Die Haftvermittler- oder erste Kleberschicht 52 ist mit Markierungen 54 versehen. Die Haftvermittler- oder erste Kleberschicht 52 mit den Markierungen 54 ist mit einer zweiten Kleberschicht 56 bedeckt. Die zweite Kleberschicht 56 ist partiell mit einem Aufdruck 58 versehen.

Bezüglich weiterer Einzelheiten wie der Zusammensetzung, den Schichtdicken usw. der einzelnen Schichten der Übertragungsfolie 18 wird auf die zitierte DE 199 40 790 A1 bezug genommen, die insoweit zum Offenbarungsgehalt der vorliegenden Erfindung gehört.

Die Übertragungsfolie 18 weist so beispielsweise folgende detaillierte Zusammensetzung auf:

### Grundfolie 20

Bei der Grundfolie 20 handelt es sich um eine an sich von Etiketten her bekannte Verstärkungsschicht. Es kann beispielsweise eine Kunststofffolie eingesetzt werden. Bevorzugt wird man aber als Grundfolie ein Silikonpapier einsetzen.

### Permanentkleber 40

Der Permanentkleber 40 hat die Aufgabe sicherzustellen, daß die Grundfolie 20 und der Trägerfilm 38 auch dann fest miteinander verbunden bleiben, wenn zur Übertragung der Übertragungsfolie auf das Substrat Hitze verwendet wird. Diese Bedingung erfüllen allgemein gängige, permanent haftende Acrylat-Dispersionskleber.

### Trägerfilm 38

Hier werden die bei Heißprägefolien üblichen Trägerfilme verwendet, wobei sinnvollerweise Kunststofffilme eingesetzt werden, die eine sehr glatte Oberfläche haben, um die Transparenz der Dekorschichtanordnung nicht durch Oberflächen-Unregelmäßigkeiten zu beeinträchtigen. In der Vielzahl der Fälle werden als Trägerfilm Polyester-Folien einer Stärke von 20 µm verwendet werden, wobei im vorliegenden Fall auch dünnere Trägerfilme eingesetzt werden können, nachdem ja der Trägerfilm während der Handhabung durch die Grundfolie verstärkt ist.

Die Ablöseschicht wird im allgemeinen vollflächig in einer Schichtdicke von ca. 0,01 bis 0,2 µm aufgebracht.

### Schutzlackschicht 44

Auch die Schutzlackschicht 44 wird im allgemeinen vollflächig und zwar in einer Schichtdicke von 0,5 bis 5,0 µm, vorzugsweise von 1 bis 2 µm aufgebracht.

### Replizierlackschicht 46

Die Replizierlackschicht 46 kann vollflächig, aber auch nur bereichsweise aufgebracht sein, und zwar dann, wenn beispielsweise vorgesehen sein sollte, die holographisch oder beugungsoptisch wirksame Struktur 48 nur bereichsweise vorzusehen. Die Schichtdicke der Replizierlackschicht beträgt 0,05 bis 1,5 µm.

### Struktur 48

Bei der Struktur 48 kann es sich um eine allgemein bekannte, für sogenannte OVDs übliche beugungsoptische oder holographisch wirksame Struktur handeln, beispielsweise um eine Gitterstruktur, wobei die optischen Eigenschaften der Struktur durch die entsprechenden Strukturparameter, beispielsweise Gitterfrequenz, Gittertiefe, Gitterneigung etc. bestimmt werden. Die Struktur wird im allgemeinen in einem Replizierverfahren in die Replizierlackschicht 46 während der Fertigung der Heißprägefolie 42 eingebracht.

### Hochreflektierende Schicht 50

Aufgabe der hochreflektierenden Schicht 50 ist eine Verbesserung der Sichtbarkeit der beugungsoptisch oder holographisch wirksamen Struktur 48, wobei, wie eine Betrachtung der Figur 7 erkennen läßt, gleichzeitig gewährleistet sein muß, daß der Betrachter durch die Schicht 50 hindurchsehen kann, um die Markierungen 54 und den Aufdruck 58 zu erkennen.

Diese Aufgabe kann beispielsweise eine aufgedampfte, hochbrechende Schicht einer Dicke von 10 bis 500 nm erfüllen, wobei beispielsweise Metalloxyde, Metallsulfide, Titandioxid etc. diese Aufgabe erfüllen können.

### Kleberschichten 52 und 56

Wie bereits erwähnt, ist es möglich, die beiden Schichten 52 und 56 aus dem gleichen transparenten Material herzustellen. Es wäre aber auch denkbar, die Schicht 52 lediglich als Haftvermittlungsschicht zwischen der Kleberschicht 46 und der Beschichtung 50 der Struktur 48 vorzusehen.

Beim Ausführungsbeispiel wird davon ausgegangen, dass zwei gleiche Kleberschichten verwendet werden, die vollflächig ausgebildet sind und eine Schichtstärke von 2 bis 10 µm, vorzugsweise 3 bis 6 µm aufweisen.

### Markierungen 54

Bei den Markierungen handelt es sich vorzugsweise um in einem Druckverfahren nach Aufbringen der ersten Klebeschicht aufgebrachte Elemente, beispielsweise spezielle graphische Elemente, eine - nur unter bestimmten Betrachtungsbedingungen sichtbare - Schrift etc... Beim Ausführungsbeispiel wird davon ausgegangen, daß die Markierungen von einem auf UV-Licht ansprechenden Dekorlack gebildet sind.

### Aufdruck 58

Der auf die freie Oberfläche der Kleberschicht 56 aufgebrachte Aufdruck 58 wird, wie bereits erwähnt, mittels geläufiger Druckverfahren erzeugt, z.B. mittels Hilfe von Laserdrucken, Thermotransferdrucken, etc. Es wäre theoretisch sogar denkbar, statt eines Aufdrucks 58 von Hand weitere Markierungen aufzubringen. Laser- oder Thermotransferdruck sind jedoch zu bevorzugen, weil in diesem Fall infolge der Festlegung der Übertragungsfolie auf dem Substrat und der Wärmeeinwirkung davon auszugehen ist, daß die den Druck erzeugenden Partikel zumindest teilweise auch direkt am Substrat haften. Wenn in einem derartigen Fall dann versucht wird, die Dekorschichtanordnung von dem Substrat abzulösen, ist damit zu rechnen, daß zumindest Reste des der Identifikation dienenden Druckes direkt am Substrat haften, so daß sich eine Ablösung der Dekorschichtanordnung ohne Spuren nicht erreichen läßt.

Eine besonders vorteilhafte Ausführungsform der Übertragungsfolie ist derart ausgebildet, daß die Dekorschichtanordnung transparent ist und die zur Festlegung der Dekorschichtanordnung an dem Substrat dienende Kleberschicht mittels eines Druckers, beispielsweise eines Laser- oder Thermotransferdruckers, bedruckt ist. Bei einer derartigen Übertragungsfolie kann beispielsweise durch das Bedrucken der Kleberschicht eine entsprechende Individualisierung erfolgen. Es ist z.B. denkbar, die die persönlichen Daten enthaltende Seite eines Reisepasses unter Verwendung der Übertragungsfolie zu sichern, wobei die Grund-Angaben bei der fabrikmäßigen Herstellung der Übertragungsfolie in einem entsprechenden Druckverfahren, beispielsweise zwischen einzelnen ganzflächig vorgesehenen Schichten der Dekorschichtanordnung angebracht werden können, während die personenbezogenen Daten, z.B. Name, Vorname, Anschrift, Geburtsdatum und Bild des Paßinhabers dann vor der Verwendung der Übertragsfolie auf deren Kleberschicht mittels eines geeigneten Druckers aufgedruckt werden. Nach dem individualisierenden Bedrucken wird die Übertragungsfolie dann mit der bedruckten Kleberschicht auf das benachbarte Blatt des Sicherheitsdokuments aufgelegt und dann durch Wärme oder ggfs. Druckeinwirkung an diesem Blatt befestigt. Diese Ausführungsform hat den Vorteil, daß die individualisierenden Angaben durch die Dekorschichtanordnung der Übertragungsfolie abgedeckt sind, d.h. eine Änderung nicht möglich ist, ohne gleichzeitig die Dekorschichtanordnung zu beschädigen. Versucht man, die Dekorschichtanordnung von dem Blatt abzuziehen, um die individualisierenden Daten zu ändern, muß mit einer Zerstörung der Dekorschichtanordnung gerechnet werden. Außerdem ist im Normalfall davon auszugehen, daß sich die individualisierenden Daten auch auf dem Blatt wiederfinden, weil bei den üblichen Verfahrensbedingungen auf der Übertragungsfolie zumindest ein gewisser Anteil der auf der Kleberschicht vorhandenen Druckfarbe sich auch mit dem Substrat direkt verbindet.

Die Dekorschichtanordnung kann eingefärbt oder bedruckt sein.

## Patentansprüche

1. Individualisiertes Sicherheitsdokument wie Reisepaß, Sparbuch o. dgl., das eine Anzahl Blätter aufweist, die miteinander mittels einer Heftung (16) oder Klebung verbunden sind
**dadurch gekennzeichnet,**
**daß** in das Sicherheitsdokument (10) mittels Heftung (16) oder Klebung eine mit Sicherheitselementen versehene Übertragungsfolie (18) eingebunden ist, die eine Grundfolie (20) und eine die Sicherheitselemente aufweisende Dekorschichtanordnung (22) aufweist, und daß die Dekorschichtanordnung (22) auf der von der Grundfolie (20) abgewandten Seite eine Klebeschicht (56) aufweist.

2. Individualisiertes Sicherheitsdokument nach Anspruch 1,
**dadurch gekennzeichnet,**
**daß** die Grundfolie (20) der mit Sicherheitselementen versehenen Übertragungsfolie (18) aus einem transparenten oder nicht transparenten Kunststoff besteht.

3. Individualisiertes Sicherheitsdokument nach Anspruch 1,
**dadurch gekennzeichnet,**
**daß** die Grundfolie (20) der mit Sicherheitselementen versehenen Übertragungsfolie (18) aus Papier oder einem papierähnlichen Substrat besteht.

4. Individualisiertes Sicherheitsdokument nach Anspruch 1 und 3,
**dadurch gekennzeichnet,**
**daß** die Sicherheitselemente aufweisende Dekorschichtanordnung (20)mittels einer Ablöseschicht (36) mit einem Trägerfilm (38) temporär verbunden ist, der mittels eines Permanentklebers (40) mit der Grundfolie (20) dauerhaft verbunden ist.

5. Individualisiertes Sicherheitsdokument nach Anspruch 3 oder 4,
**dadurch gekennzeichnet,**
**daß** die Grundfolie (20) mindestens eine Fensteröffnung aufweist.

6. Individualisiertes Sicherheitsdokument nach einem der Ansprüche 1 bis 5,
**dadurch gekennzeichnet,**
**daß** die Dekorschichtanordnung (22) auf die Grundfolie (20) oder auf den mit der Grundfolie (20) dauerhaft verbundenen Trägerfilm (38) als Etikett aufgespendet ist.

7. Individualisiertes Sicherheitsdokument nach einem der Ansprüche 1 bis 5,
**dadurch gekennzeichnet,**
**daß** die Dekorschichtanordnung (22) auf die Grundfolie (20) oder auf den mit der Grundfolie (20) dauerhaft verbundenen Trägerfilm (38) aufkaschiert ist.

8. Individualisiertes Sicherheitsdokument nach einem der Ansprüche 1 bis 7,
**dadurch gekennzeichnet,**
**daß** die Dekorschichtanordnung (22) transparent oder teiltransparent ist.

9. Individualisiertes Sicherheitsdokument nach einem der Ansprüche 1 bis 8,
**dadurch gekennzeichnet,**
**daß** die Grundfolie (20) und/oder der Trägerfilm (38) mit Positionsmarkierungen und/oder mit Nummerierungen (Barcodes) versehen ist.

10. Individualisiertes Sicherheitsdokument nach einem der Ansprüche 1 bis 9,
**dadurch gekennzeichnet,**
**daß** zum Austrennen der Grundfolie (20) oder der Grundfolie (20) mit dem mit ihr dauerhaft verbundenen Trägerfilm (38) zumindest die Grundfolie (20) mit einer Perforation (24) ausgebildet ist.

11. Individualisiertes Sicherheitsdokument nach Anspruch 10,
**dadurch gekennzeichnet,**
**daß** die Perforation (24) nur in der Grundfolie (20) ausgebildet und die Dekorschichtanordnung (22) von der Perforation (24) seitlich beabstandet ist.

12. Individualisiertes Sicherheitsdokument nach Anspruch 10,
**dadurch gekennzeichnet,**
**daß** die Perforation (24) sich durch die Grundfolie (20) und durch die Dekorschichtanordnung (22) hindurcherstreckt.

13. Individualisiertes Sicherheitsdokument nach einem der Ansprüche 10 bis 12,
**dadurch gekennzeichnet,**
**daß** die Perforation (24) der Sicherheitselemente aufweisenden Übertragungsfolie (18) mit der Heftung (16) oder Klebung des Sicherheitsdokumentes (10) deckungsgleich vorgesehen und die mit Sicherheitselementen versehene Übertragungsfolie (18) mittels der Heftung (16) oder Klebung in dem Sicherheitsdokument (10) fixiert ist.

14. Individualisiertes Sicherheitsdokument nach einem der Ansprüche 10 bis 12,
**dadurch gekennzeichnet,**
**daß** die Perforation (24) der Sicherheitselemente aufweisenden Übertragungsfolie (18) gegen die Heftung (16) oder Klebung des Sicherheitsdokumentes (10) seitlich versetzt vorgesehen und der durch die Perforation (24) bestimmte Randbereich (32) der Übertragungsfolie (18) mittels der Heftung (16) oder Klebung in dem Sicherheitsdokument (10) derartig fixiert ist, daß auf beiden Seiten der Heftung (16) ein Grundfolienstreifen (24) verbleibt.

15. Individualisiertes Sicherheitsdokument nach Anspruch 14,
**dadurch gekennzeichnet,**
**daß** die Grundfolie (20) aus einem Sicherheitsmerkmale aufweisenden Sicherheitspapier besteht.

16. Individualisiertes Sicherheitsdokument nach einem der Ansprüche 1 bis 15,
**dadurch gekennzeichnet,**
**daß** die mit Sicherheitselementen versehene Übertragungsfolie (18) an eine Seite des Sicherheitsdokumentes (10) angepaßte Flächenabmessungen aufweist.

17. Individualisiertes Sicherheitsdokument nach einem der Ansprüche 1 bis 15,
**dadurch gekennzeichnet,**
**daß** die mit Sicherheitselementen versehene Übertragungsfolie (18) an eine Doppelseite des Sicherheitsdokumentes (10) angepaßte Flächenabmessungen aufweist.

## Claims

1. Individualized security document such as a passport, savings book or the like, which has a number of pages that are connected to one another by means of stitching (16) or adhesive bonding,
**characterized in that** a transfer sheet (18) provided with security elements is incorporated into the security document (10) by means of stitching (16) or adhesive bonding and has a base sheet (20) and a decorative layer arrangement (22) having the security elements, and **in that** the decorative layer arrangement (22) has an adhesive layer (56) on the side facing away from the base sheet (20).

2. Individualized security document according to Claim 1, **characterized in that** the base sheet (20) of the transfer sheet (18) provided with the security elements consists of a transparent or non-transparent plastic.

3. Individualized security document according to Claim 1, **characterized in that** the base sheet (20) of the transfer sheet (18) provided with the security elements consists of paper or a paper-like substrate.

4. Individualized security document according to Claim 1 and 3, **characterized in that** the decorative layer arrangement (22) having security elements is temporarily connected by a release layer (36) to a carrier sheet (38), which is permanently connected to the base sheet (20) by means of a permanent adhesive (40).

5. Individualized security document according to Claim 3 or 4, **characterized in that** the base sheet (20) has at least one window opening.

6. Individualized security document according to one of Claims 1 to 5, **characterized in that** the decorative layer arrangement (22) is dispensed as a label on to the base sheet (20) or on to the carrier sheet (38) permanently connected to the base sheet (20).

7. Individualized security document according to one of Claims 1 to 5, **characterized in that** the decorative layer arrangement (22) is laminated on to the base sheet (20) or on to the carrier sheet (38) permanently connected to the base sheet (20).

8. Individualized security document according to one of Claims 1 to 7, **characterized in that** the decorative layer arrangement (22) is transparent or part-transparent.

9. Individualized security document according to one of Claims 1 to 8, **characterized in that** the base sheet (20) and/or the carrier sheet (38) is provided with position markings and/or with numbering (bar codes).

10. Individualized security document according to one of Claims 1 to 9, **characterized in that**, in order to separate out the base sheet (20) or the base sheet (20) with the carrier sheet (38) permanently connected thereto, at least the base sheet (20) is formed with a perforation (24).

11. Individualized security document according to Claim 10, **characterized in that** the perforation (24) is formed only in the base sheet (20) and the decorative layer arrangement (22) is spaced apart laterally from the perforation (24).

12. Individualized security document according to Claim 10, **characterized in that** the perforation (24) extends through the base sheet (20) and through the decorative layer arrangement (22).

13. Individualized security document according to one of Claims 10 to 12, **characterized in that** the perforation (24) of the transfer sheet (18) having the security elements is provided so as to coincide with the stitching (16) or adhesive bonding of the security document (10), and the transfer sheet (18) provided with security elements is fixed in the security document (10) by means of the stitching (16) or adhesive bonding.

14. Individualized security document according to one of Claims 10 to 12, **characterized in that** the perforation (24) of the transfer sheet (18) having the security elements is provided so as to be offset laterally from the stitching (16) or adhesive bonding of the security document (10), and the edge region (32) of the transfer sheet (18) that is determined by the perforation (24) is fixed in the security document (10) by means of the stitching (16) or adhesive bonding in such a way that a base sheet strip (24) remains on both sides of the stitching (16).

15. Individualized security document according to Claim 14, **characterized in that** the base sheet (20) consists of a security paper having security features.

16. Individualized security document according to one of Claims 1 to 15, **characterized in that** the transfer sheet (18) provided with security elements has surface dimensions matched to one page of the security document (10).

17. Individualized security document according to one of Claims 1 to 15, **characterized in that** the transfer sheet (18) provided with security elements has surface dimensions matched to a double page of the security document (10).

## Revendications

1. Document de sécurité individualisé tel qu'un passeport, un livret de caisse d'épargne ou un autre document du même genre, qui comporte un certain nombre de pages qui sont reliées les unes aux autres par une couture (16) ou un collage,
**caractérisé en ce que**
une feuille de transfert (18) munie d'éléments de sécurité, qui comprend une feuille de base (20) et un agencement stratifié décoratif (22) comportant les éléments de sécurité, est reliée dans le document de sécurité (10) par une couture (16) ou un collage, et **en ce que** l'agencement stratifié décoratif (22) présente une couche de colle sur la face opposée à la feuille de base (20).

2. Document de sécurité individualisé selon la revendication 1,
**caractérisé en ce que**
la feuille de base (20) de la feuille de transfert (18) munie d'éléments de sécurité est constituée d'une matière synthétique transparente ou non transparente.

3. Document de sécurité individualisé selon la revendication 1,
**caractérisé en ce que**
la feuille de base (20) de la feuille de transfert (18) munie d'éléments de sécurité est constituée d'un substrat en papier ou semblable à du papier.

4. Document de sécurité individualisé selon les revendications 1 et 3,
**caractérisé en ce que**
l'agencement stratifié décoratif (22) comportant les éléments de sécurité est relié temporairement avec un film support (38), à l'aide d'une couche détachable (36), lequel film est relié durablement avec la feuille de base (20) à l'aide d'une colle permanente (40).'

5. Document de sécurité individualisé selon la revendication 3 ou 4,
**caractérisé en ce que**
la feuille de base (20) comporte au moins une ouverture en fenêtre.

6. Document de sécurité individualisé selon l'une quelconque des revendications 1 à 5,
**caractérisé en ce que**
l'agencement stratifié décoratif (22) est appliqué comme étiquette sur la feuille de base (20) ou sur le film support (38) relié durablement avec la feuille de base (20).

7. Document de sécurité individualisé selon l'une quelconque des revendications 1 à 5,
**caractérisé en ce que**
l'agencement stratifié décoratif (22) est contrecollé sur la feuille de base (20) ou sur le film support (38) relié durablement avec la feuille de base (20).

8. Document de sécurité individualisé selon l'une quelconque des revendications 1 à 7,
**caractérisé en ce que**
l'agencement stratifié décoratif (22) est transparent ou partiellement transparent.

9. Document de sécurité individualisé selon l'une quelconque des revendications 1 à 8,
**caractérisé en ce que**
l'agencement stratifié décoratif (22) et/ou le film support (38) est muni de marquages de position et/ou de numérotations (codes barres).

10. Document de sécurité individualisé en particulier selon l'une quelconque des revendications 1 à 9,
**caractérisé en ce que**
pour séparer la feuille de base (20) ou la feuille de base (20) avec le film support (38) relié durablement avec celle-ci, au moins la feuille de base (20) est conçue avec une perforation (24).

11. Document de sécurité individualisé selon la revendication 10,
**caractérisé en ce que**
la perforation (24) est formée seulement dans la feuille de base (20) et l'agencement stratifié décoratif (22) est espacé latéralement de la perforation (24).

12. Document de sécurité individualisé selon la revendication 10,
**caractérisé en ce que**
la perforation (24) s'étend à travers la feuille de base (20) et l'agencement stratifié décoratif (22).

13. Document de sécurité individualisé selon l'une quelconque des revendications 10 à 12,
**caractérisé en ce que**
la perforation (24) de la feuille de transfert (18) comportant des éléments de sécurité est prévue pour coïncider avec la couture (16) ou avec le collage du document de sécurité (10) et la feuille de transfert (18) munie d'éléments de sécurité est fixée dans le document de sécurité (10) à l'aide de la couture (16) ou du collage.

14. Document de sécurité individualisé selon l'une quelconque des revendications 10 à 12,
**caractérisé en ce que**
la perforation (24) de la feuille de transfert (18) comportant des éléments de sécurité est prévue pour être décalée latéralement contre la couture (16) ou le collage du document de sécurité (10) et la zone marginale (32) de la feuille de transfert (18) déterminée par la perforation (24) est fixée dans le document de sécurité (10) à l'aide de la couture (16) ou du collage de manière à ce qu'il reste une bande de feuille de base (24) des deux côtés de la couture (16).

15. Document de sécurité individualisé selon la revendication 14,
**caractérisé en ce que**
la feuille de base (20) est constituée d'un papier de sécurité présentant des caractéristiques de sécurité.

16. Document de sécurité individualisé selon l'une quelconque des revendications 1 à 15,
**caractérisé en ce que**
la feuille de transfert (18) munie d'éléments de sécurité présente des dimensions de surface adaptées à une face du document de sécurité (10).

17. Document de sécurité individualisé selon l'une quelconque des revendications 1 à 15,
**caractérisé en ce que**
la feuille de transfert (18) munie d'éléments de sécurité présente des dimensions de surface adaptées à une double face du document de sécurité (10).
